(19) Europäisches Patentamt
European Patent Office
Office européen des brevets

(11) Numéro de publication: **0 112 738 B1**

(12) # FASCICULE DE BREVET EUROPEEN

(45) Date de publication du fascicule du brevet: **13.05.87**

(51) Int. Cl.⁴: **C 02 F 5/12**

(21) Numéro de dépôt: **83402214.7**

(22) Date de dépôt: **17.11.83**

(54) **Procédé pour l'empêchement de l'entartrage par des eaux.**

(30) Priorité: **24.11.82 FR 8219662**

(43) Date de publication de la demande: **04.07.84 Bulletin 84/27**

(45) Mention de la délivrance du brevet: **13.05.87 Bulletin 87/20**

(84) Etats contractants désignés: **BE DE GB IT LU NL**

(56) Documents cités:
**EP-A-0 104 970**
**FR-A-2 288 113**
**FR-A-2 476 113**
**US-A-4 003 842**

(73) Titulaire: **SOCIETE NATIONALE ELF AQUITAINE, Tour Aquitaine, F-92400 Courbevoie (FR)**

(72) Inventeur: **Meunier, Gilles, Bourg de Mazerolles Mazerolles, F-64230 Lescar (FR)**
Inventeur: **Vio, Lino, 73 Avenue Copernic, F-64000 Pau (FR)**

(74) Mandataire: **Kohn, Armand, 5 Avenue Foch, F-92380 Garches (FR)**

EP 0 112 738 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé pour la suppression de l'entartrage dû au dépôt de composés alcalinoterreux sur les parois de conduites, récipients, appareils ou diverses enceintes, à partir d'eaux renfermant de tels composés. Elle comprend l'utilisation d'un nouveau type d'agent pour la mise en œuvre de ce procédé. Plus spécialement, l'invention vise l'emploi des agents antitartre qui permettent d'éviter la formation des dépôts de composés du calcium à partir des eaux calcaires y compris l'eau de mer.

L'entartrage est un phénomène qui gêne l'industrie, on peut dire depuis la naissance de celle-ci, dans tous les cas où des eaux plus ou moins calcaires entrent en jeu. Aussi a-t-on cherché et trouvé de nombreux agents pour éviter la formation de dépôts calcaires dans des conduites ou conteneurs divers. On connait par exemple l'emploi de phosphates, phosphonates, acrylates, aryl ou alkylsulfonates de métaux alcalins, etc., dont chacun a un certain domaine d'application. Cependant, la plupart de ces adjuvants doivent être employés en quantité relativement forte et – d'autre part – ils imposent un certain pH qui peut ne pas être souhaitable dans le cas donné. On sait, par exemple, que dans le cas de l'eau de mer, l'entartrage par des sels de calcium ou de baryum, notamment sulfates et carbonates, n'est que partiellement atténué par des agents tels que phosphonates ou polyacrylates alcalins.

La présente invention apporte un procédé qui utilise un nouveau type d'adjuvant, dont l'action s'exerce efficacement, même à des doses très faibles; un autre avantage de ces nouveaux agents est qu'ils n'imposent pas un pH particulier et restent efficaces dans une large gamme de pH, de part et d'autre de la neutralité; en outre, les nouveaux agents, suivant l'invention, restent actifs, même en présence de fortes salinités de l'eau, ce qui les rend fort utiles dans le traitement de l'eau de mer.

Les nouveaux agents antitartre, utilisés suivant l'invention, sont des polymères hydrosolubles, porteurs de groupes hydroxamiques attachés à une chaîne hydrocarbonée, linéaire. Ces polymères peuvent être représentés par la formule

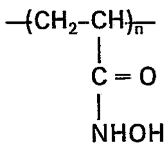 (1)

La chaîne polyoléfinique $-CH_2-CH-$ peut être du type polyvinyle, polyacryle, polybutényle, etc., mais peut également comporter des motifs de copolymères, par exemple des acides, esters ou sels acryliques, maléiques, vinyliques, en particulier d'acétate de vinyle, de vinyl pyrrolidone, de butadiène, styrène ou d'acrylonitrile.

Dans les agents antitartre, utilisés suivant l'invention, le groupe hydroxamique peut être partiellement ou entièrement remplacé par un thio dérivé correspondant, c'est-à-dire un groupe du type

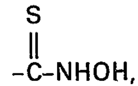, 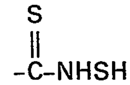 ou 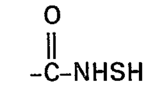

Une forme particulièrement utile des polymères hydroxamiques concernés est celle dans laquelle la chaîne hydrocarbonée porte à la fois les groupes hydroxamiques (1) et des groupes amide

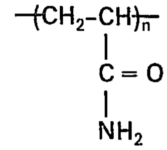 (2)

L'activité antitartre des fonctions hydroxamiques n'est pas gênée par la présence des fonctions amide, alors que la préparation de ces composés mixtes hydroxamiques et amidiques est aisée, ce qui présente un avantage industriel indéniable. On peut en effet fabriquer des polymères porteurs des deux sortes de groupes en question (1) et (2) avec bon rendement par chauffage d'un polyacrylamide avec de l'hydroxylamine.

L'empêchement de la précipitation de composés alcalinoterreux dans une eau se fait le mieux lorsque dans le polymère hydroxamique employé 5 à 90% des fonctions actives sont des groupes hydroxamiques (1), le reste étant des groupes amide (2); les proportions préférées sont cependant de 15 à 70% de groupes hydroxamiques et 30 à 85% de groupes amide.

Bien que l'invention puisse être réalisée avec des polymères de degrés de polymérisation très variés, notamment de 5 à 600, il est préférable d'employer des agents facilement solubles dans l'eau, ne communiquant à celle-ci qu'une faible viscosité, ce qui est obtenu avec des degrés de polymérisation de 10 à 230 et surtout de 12 à 140.

Quand la chaîne hydrocarbonée est du type simple, figurée dans les formules (1) et (2), les masses moléculaires (en poids) moyennes des polymères utilisables, correspondant aux degrés de polymérisation indiqués plus haut, se situent entre 500 et 50 000, de préférence entre 1000 et 20 000 et le mieux de 1200 à 12 000.

Dans les polymères décrits, 1 ou les 2 atomes d'hydrogène, dans le groupe $-NHOH$, peuvent être substitués par des radicaux alkyliques ou aryliques, notamment des alkyles en $C_1$ à $C_6$ ou par des phényles. Ainsi, peut-on avoir, par exemple, des polymères du type

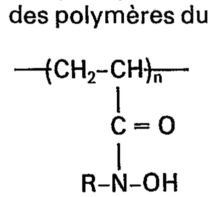

où R peut être $-CH_3$, $-C_3H_7$, $-C_6H_{13}$, $-C_6H_5$, $-C_6H_5(CH_2)_n$, etc.

Les effets antitartrate des agents, utilisés suivant l'invention, s'exercent généralement quelle que soit la cause de la tendance à la précipitation d'un composé alcalino-terreux. Ainsi entrent-ils en jeu lorsqu'un ion précipitant, tel que $SO_4^=$ ou $CO_3^=$, est introduit dans une eau contenant des cations $Ca^{++}$ ou/et $Ba^{++}$. Ils ne manifestent de même lorsque la précipitation est due aux changements de température ou de pression. Il en résulte que les agents, suivant l'invention, sont fort utiles pour éviter l'encrassement et le bouchage de canalisations et des robinetteries, le colmatage de filtres et des milieux poreux, qui ne peuvent plus se produire du fait du maintien dans l'eau des composés qui ont tendance à précipiter. Une application particulière est celle où l'eau de mer est injectée dans un gisement contenant du Ca ou/et Ba en quantité appréciable. Comme la teneur en ion $S_4^=$ est de l'ordre de 2,5 g/l, il y a de grands risques de précipitation du sulfate alcalino-terreux, insoluble, colmatage à la formation, et entartrage des canalisations. Or, la réinjection d'eau de mer est fréquemment pratiquée, en particulier dans les gisements pétroliers en mer: on réalise donc un progrès technique marqué en empêchant cette précipitation par l'adjonction d'un polymère hydroxamique suivant l'invention.

La concentration du milieu aqueux en le polymère hydroxamique, nécessaire à l'empêchement de la précipitation d'alcalino-terreux et/ou à la limitation de l'augmentation de la taille de cristaux, dépend de la nature du milieu traité et de la concentration de celui-ci en les éléments précipitables. On peut cependant considérer approximativement, pour la plupart des cas pratiques, que cette concentration doit être d'environ 1 à 50 mg/l. Lorsqu'il s'agit des composés du calcium, risquant de se déposer sous la forme de sulfate, il suffit généralement de 2 à 5 mg de polymère pour empêcher la précipitation de 100 mg de Ca.

L'invention est illustrée, non limitativement, par les exemples qui suivent.

Exemple 1

L'agent antitartre employé est un polymère obtenu à partir du polyacrylamide par le remplacement de 25% des groupes amide par des groupes hydroxamiques. La masse moléculaire moyenne de ce polymère est de 7500, ce qui correspond à un degré de polymérisation d'environ 100.

Deux solutions aqueuses sont préparées à partir de l'eau distillée, pour contenir les sels suivants:

Solution A: $Cacl_2 2H_2O$ 64,9 g/l + $MgCl_2$ 0,5 g/l
Solution B: $Na_2SO_4$ 62,7 g/l

Dans un flacon de 500 ml, on introduit 400 ml d'eau distillée à laquelle on ajoute 50 ml de solution A, progressivement, en agitant, et ensuite 50 ml de solution B; dans un flacon, servant de témoin, on n'ajoute plus rien, tandis que dans les autres flacons, on ajoute une certaine quantité d'agent antitartre, mentionné plus haut. Le tout est bien homogénéisé et le flacon bouché est laissé au repos pendant 7 jours.

On prélève alors quelques ml de liqueur surnageante et on y dose le calcium.

Voici les résultats de ces essais.

| | Témoin | Agent suivant l'invention | |
|---|---|---|---|
| Teneur en agent antitartre, mg/l | 0 | 0,2 | 1 |
| Ca précipité, mg/l | 39 | 34 | 0 |

On voit qu'à partir de 0,2 mg/l de polymère hydroxamique, la quantité de calcium décroît sensiblement, et avec 1 mg de polymère la précipitation est complètement empêchée. Comme sans adjuvant (essai témoin) il se dépose 39 mg de Ca par litre, l'expérience ci-dessus montre qu'il a suffit de 1:39, soit 2,56 mg de polymère pour 100 mg de Ca précipitable, pour enrayer complètement la précipitation.

Exemples 2 à 7

Des essais analogues à celui de l'exemple 1 sont effectués avec le même type d'acide polyhydroxaminque (APH), mais à des masses molaires variables et de teneurs en groupes hydroxamiques différentes.

1 mg d'APH/l d'eau est ajouté dans chacun des essais.

Le tableau suivant indique les résultats obtenus, c'est-à-dire le nombre de mg de CA déposé en 7 jours. Dans ce tableau, hx désigne la proportion % des groupes hydroxamiques présents par rapport au total des groupes hydroxamiques et amidiques.

Ainsi hx = O correspond au polyacrylamide de départ, lui-même, ne contenant pas de groupes hydroxamiques. Voir tableau .

| Ex | hx% | Masse molaire moyenne | | | |
|---|---|---|---|---|---|
| | | 800 | 1500 | 7500 | 20 000 |
| 2 | 0 | 12 | 8 | 15 | 23 |
| 3 | 6 | 4 | 2 | 4 | 11 |

| Ex | hx% | Masse molaire moyenne | | | |
|---|---|---|---|---|---|
| | | 800 | 1500 | 7500 | 20 000 |
| 4 | 15 | 1 | 0 | 0 | 4 |
| 5 | 39 | 0 | 0 | 0 | 2 |
| 6 | 60 | 0 | 0 | 0 | 1 |
| 7 | 85 | 0 | 0 | 0 | 3 |

Les résultats montrent que les groupes hydroxamiques ont une activité antitartre beaucoup plus marquée que celle des groupes amide (voir exemple 2). D'autre part, ce sont les masses moléculaires de 1500 à 7500 qui ont la marge d'activité la plus large pour des hx variables.

Exemple 8

Précipitation de sulfate de baryum par l'eau de mer

A une solution aqueuse de chlorures de Ca et de Ba, renfermant par litre 3 g de Ca et 0,25 g de Ba, on ajoute des volumes variables d'eau de mer et l'on dose le baryum restant en solution après 5 jours de repos à la température ambiante.

Dans une partie des solutions essayées, on introduit au départ une certaine quantité d'agent polyhydroxamique, suivant l'invention, de masse moléculaire 1500 et présentant un taux de groupes hydroxamiques de 30%.

On fait varier les proportions d'agent ajouté, ainsi que les pourcent d'eau de mer dans le mélange de celle-ci avec la solution de calcium et baryum.

| | mg d'agent | % eau de mer dans le mélange | Ba en solution après 5 jours mg/l |
|---|---|---|---|
| Témoin | 0 | 50 | <1 |
| Agent | 50 | 50 | environ 4 |
| Témoin | 0 | 5 | environ 70 |
| Agent | 20 | 5 | environ 240 |

Exemple 9

Cet exemple est réalisé dans les mêmes conditions que l'exemple 8, sauf en ce qui concerne la température de vieillissement et de préparation des solutions fixées à 50°C.

| | mg d'agent | % eau de mer dans le mélange | Baryum en solution après 5 jours à 50° (mg/l) |
|---|---|---|---|
| Témoin | 0 | 5 | 79 |
| Agent | 50 | 5 | 109 |
| Témoin | 5 | 50 | 0,8 |
| Agent | 50 | 50 | 3 |

Il faut remarquer que ces résultats sont quantitativement un peu moins nets que ceux que l'on observe à froid. Mais qualitativement l'observation au microscope montre que les cristaux obtenus en présence d'APH sont plus petits et beaucoup moins agglomérés. Ils sont donc moins gênants que ceux qui se forment en l'absence de cet additif.

**Revendications**

1. Procédé pour la suppression de l'entartrage par dépôt de composés alcalino-terreux à partir d'un milieu aqueux, caractérisé en ce que ce milieu est additionné d'agent comprenant un polymère hydrosoluble, porteur de groupes hydroxamiques ou thiohydroxamiques, pouvant porter des substituants, attachés à une chaîne hydrocarbonée, linéaire.

2. Procédé suivant la revendication 1, caractérisé en ce que la chaîne hydrocarbonée est polyoléfinique, notamment du type polyfinyle, polyacryle ou polybutényle.

3. Procédé suivant la revendication 1 ou 2, caractérisé en ce que le polymère, porteur de groupes hydroxamiques, comporte des motifs de copolymères, en particulier acides, esters ou sels acryliques, maléiques, vinyliques, vinyl pyrrolidone, butadiène, styrène ou acrylonitrile.

4. Procédé suivant une des revendications 1 à 3, caractérisé en ce qu'un ou les deux atomes d'oxygène du groupe hydroxamique sont remplacés par des atomes de soufre.

5. Procédé suivant une des revendications précédentes, caractérisé en ce que la chaîne hydrocarbonée porte également des groupes amide.

6. Procédé suivant la revendication 5, caractérisé en ce que 5 à 90% des fonctions actives du polymère sont constitutées par des groupes hydroxamiques, le reste étant des groupes amide, les proportions préférées étant de 15 à 70% de groupes hydroxamiques et 30 à 85% de groupes amide.

7. Procédé suivant une des revendications précédentes, caractérisé en ce que le degré de polymérisation de l'agent antitartre est de 5 à 600, en particulier de 10 à 230 et surtout de 12 à 140.

8. Procédé suivant une des revendications précédentes, dans lequel 1 ou 2 atomes d'hydrogène de la fonction NHOH hydroxamique sont remplacés par des radicaux, en particulier en $C_1$ à $C_6$, des phényles ou/et des alkylaryles.

9. Procédé suivant une des revendications précédentes, appliqué à l'empêchement de la précipitation d'un sel de Ca, caractérisé en ce que le milieu aqueux, renfermant un tel sel, est additionné de 1 à 50 mg de polymère à groupes hydroxamiques, et en particulier de 2 à 5 mg de polymère pour 100 mg de calcium précipitable.

**Patentansprüche**

1. Verfahren zur Unterdrückung der Kesselsteinbildung durch Ablagerung von Erdalkaliverbindungen aus einem wässrigen Milieu, dadurch gekennzeichnet, dass man dieses Milieu mit einem Mittel versetzt, das ein wasserlösliches Polymeres enthält, das Hydroxamsäure- oder Thiohydroxamsäuregruppen trägt, die Substituenten aufweisen können und an eine lineare Kohlenwasserstoffkette gebunden sind.

2. Verfahren nach Anspruch 1, dudurch gekennzeichnet, dass die Kohlenwasserstoffkette polyolefinisch ist, insbesondere vom Typ Polyvinyl, Polyacryl oder Polybutenyl.

3. Verfahren nach Anspruch 1 oder 2, dadurch gekennzeichnet, dass das Polymere, das die Hydroxamsäuregruppen trägt, Copolymer-Einheiten, insbesondere Säuren, Ester oder Salze, abgeleitet von Acrylsäure, Maleinsäure, vinylischer Natur, Vinylpyrolidon, Butadien, Styrol oder Acrylnitril, enthält.

4. Verfahren nach Ansprüche 1 bis 3, dadurch gekennzeichnet, dass eines oder beide der Sauerstoffatome der Hydroxamsäuregruppe durch Schwefelatome ersetzt sind.

5. Verfahren nach einem der vorhergehenden Ansprüche, dadurch gekennzeichnet, dass die Kohlenwasserstoffkette auch Amidgruppen trägt.

6. Verfahren nach Anspruch 5, dadurch gekennzeichnet, dass 5 bis 90% der aktiven Funktionen des Polymeren von Hydroxamsäuregruppen gebildet werden, wobei der Rest aus Amidgruppen besteht, wobei die bevorzugten Anteile 15 bis 70% Hydroxamsäuregruppen und 30 bis 85% Amidgruppen sind.

7. Verfahren nach einem der vorhergehenden Ansprüche, dadurch gekennzeichnet, dass der Polymerisationsgrad des kesselsteinverhindernden Mittels 5 bis 600, besonders 10 bis 230 und insbesondere 12 bis 140 beträgt.

8. Verfahren nach einem der vorhergehenden Ansprüche, bei dem 1 oder 2 Wasserstoffatome der NHOH Funktion der Hydroxamsäure durch Reste, insbesondere mit $C_1$-$C_6$, Phenyl und/oder Alkylaryl, ersetzt sind.

9. Verfahren nach einem der vorhergehenden Ansprüche, angewendet zur Verhinderung der Ausfällung eines Ca-Salzes, dadurch gekennzeichnet, dass das wässrige Milieu, das ein derartiges Salz enthält, mit 1 bis 50 mg Polymeren mit Hydroxamsäuregruppen, und insbesondere mit 2 bis 5 mg des Polymeren, pro 100 mg Calciumausfällung versetzt wird.

**Claims**

1. Process for suppressing scaling by the deposit of alkaline earth compounds from an aqueous medium, characterised in that an agent comprising a watersoluble polymer carrying hydroxamic or thiohydroxamic groups and optionally carrying substituents attached to a straight hydrocarbon chain is added to the medium.

2. Process according to claim 1, characterised in that the hydrocarbon chain is polyolefinic, particularly of the polyvinyl, polyacrylic or polybutenyl type.

3. Process according to claim 1 or 2, characterised in that the polymer carrying hydroxamic groups comprises copolymer units, in particular acrylic, maleic or vinyl acids, esters or salts, vinylpyrrolidone, butadiene, styrene or acrylonitrile.

4. Process according to any of claims 1 to 3, characterised in that one of or the two oxygen atoms of the hydroxamic group is/are replaced by sulphur atoms.

5. Process according to any of the preceding claims, characterised in that the hydrocarbon chain also carries amide groups.

6. Process according to claim 5, characterised in that 5 to 90% of the active functions of the polymer comprise hydroxamic groups, the rest being amide groups, the preferred proportions being 15 to 70% of hydroxamic groups and 30 to 85% of amide groups.

7. Process according to any of the preceding claims, characterised in that the degree of polymerisation of the anti-scaling agent is from 5 to 600, in particular from 10 to 230 and especially from 12 to 140.

8. Process according to any of the preceding claims, in which 1 or 2 hydrogen atoms of the hydroxamic NHOH function are replaced by radicals, in particular $C_1$ to $C_6$, phenyls and/or alkylaryls.

9. Process according to any of the preceding claims, applied to prevention of the precipitation of a Ca salt, characterised in that 1 to 50 mg of a polymer having hydroxamic groups and, in particular, 2 to 5 mg of polymer per 100 mg of precipitatable calcium is added to the aqueous medium containing such a salt.